# EUROPEAN PATENT SPECIFICATION

(11) **EP 1 331 433 B1**
(45) Date of publication and mention of the grant of the patent: **29.08.2007**
(21) Application number: 03001614.1
(22) Date of filing: 24.01.2003
(51) Int. Cl.: F16P 3/14

(54) **Multi-optical-path photoelectric safety apparatus**
Photoelektrische, optische Mehrwegsicherheitsvorrichtung
Dispositif de sécurité photoélectrique à chemin optique multiple

(30) Priority: 25.01.2002 JP 2002017572
(43) Date of publication of application: 30.07.2003
(73) Proprietor: Keyence Corporation, Osaka-shi, Osaka 533-8555 (JP)
(72) Inventor: Kudo, Motohiro, c/oKeyence Corporation, Osaka-shi, Osaka 533-8555 (JP); Inoue, Tetsu, c/oKeyence Corporation, Osaka-shi, Osaka 533-8555 (JP)
(74) Representative: Zimmermann, Gerd Heinrich

(56) References cited:
- DE-A- 2 343 096
- DE-A- 4 422 497
- US-A- 4 249 074
- US-A- 5 243 183

## Description

The present invention relates to a multi-optical-path photoelectric safety apparatus having a light emitting unit and a light receiving unit. More particularly, the present invention relates to a multi-optical-path photoelectric safety apparatus comprising a muting function.

A multi-optical-path photoelectric safety apparatus is provided to ensure worker safety when using an apparatus involving a source of danger, such as a pressing machine. The multi-optical-path photoelectric safety apparatus comprises a light emitting unit and a light receiving unit. The light emitting unit comprises a large number of light emitting elements arranged in a row. The light receiving unit comprises a corresponding number of light receiving elements as the number of the light emitting elements, and they are also arranged in a row. The light emitting and receiving units form a protective barrier by making a light curtain. When a light blocking substance through which light cannot transmit enters a detection area of the protective barrier, the operation of the machine is forcibly stopped.

In a pressing or other machine it is necessary to carry a workpiece in and carry the post-worked workpiece out. Thus, the workpiece needs to be passed through the light curtain. The multi-optical-path photoelectric safety apparatus comprises a muting function to allow the workpiece to pass through the light curtain. That is, the muting function temporarily makes the protection function of the multi-optical-path photoelectric safety apparatus ineffective when the workpiece passes through the light curtain.

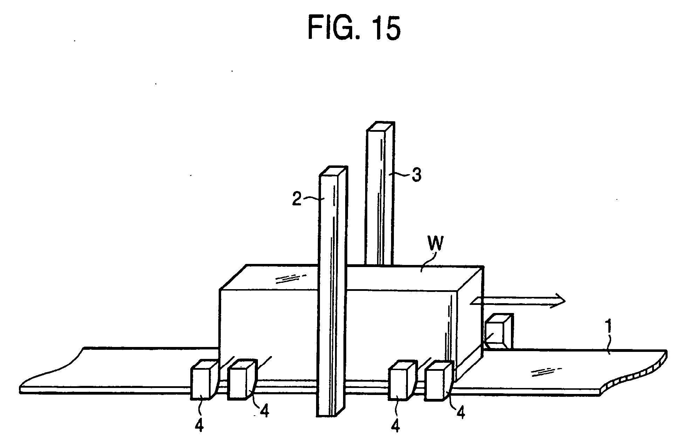

FIG. 15 shows an outline of a multi-optical-path photoelectric safety apparatus comprising a muting function in a related art device. In the related art example, a light emitting unit 2 and a light receiving unit 3 are installed on either side of a conveyor line 1 carrying a workpiece into a pressing machine.

The conveyor line 1 is provided with workpiece detection sensors 4 for detecting a workpiece W passing through a light curtain. When the workpiece W is detected, the muting function is started. During the muting function in the related art device, all of the detection areas of the light curtain formed between the light emitting unit 2 and the light receiving unit 3 become ineffective.

The muting function removes the essential protection function from the multi-optical-path photoelectric safety apparatus although this protection function is only removed temporarily. However, removing the protection function of all of the detection areas of the light curtain when the muting function is operated is not preferred.

Document DE2343096 describes a safety apparatus having a light barrier comprising a light curtain formed by a plurality of groups of light rays essentially parallel to each other, whereby the light rays of all groups are located at least nearly in a common plane, and the individual groups are put against each other at an angle, and for omitting the barrier effect of an area of the light curtain corresponding to the largest cross sectional area of the work piece parallel to the light curtain, the barrier effect of all light rays penetrating the area that is to be omitted can be switched off.

Further, document US5243183 describes a variant in a presence detection apparatus having a plurality of sets of light beam sources and photodetectors, the source and photodetector of each set defining a light beam channel and being disposed so the light beam from the source impinges upon the photodetector in the absence of an obstruction in the light beam channel, said sets of light beam channels being arranged at predetermined locations to define a screen, the variant comprising: sensing means for sensing the output of each photodetector to detect blocked light beam channels; memory means coupled to said sensing means for storing the location of blocked light beam channels; and comparison means coupled to said sensing means and said memory means for comparing the location of sensed blocked light beam channels with stored locations of blocked light beam channels.

DE 4 422 497 A1 describes another related art multi-optical-path photoelectric safety apparatus.

The present invention intends to overcome some of the above problems. The object is solved by the multi-optical-path photoelectric safety apparatus according to independent claim 1.

Further advantages, features, aspects and details of the invention are evident from the dependent claims, the description and the accompanying drawings.

It is therefore an object of the invention to provide a multi-optical-path photoelectric safety apparatus for making a muting function effective while exerting the essential protection function of the multi-optical-path photoelectric safety apparatus. Namely, a light block substance sensing function provides compatibility between the functions, thereby making it possible to allow a light block substance, such as a workpiece, to pass through a light curtain while continuing to ensure safety.

To this end, according to the invention, there is provided a multi-optical-path photoelectric safety apparatus comprising: a light emitting unit; a light receiving unit forming a light curtain with the light receiving unit; and a muting function for temporarily rendering a protection function of the light curtain ineffective by allowing a predetermined light block substance to pass through the light curtain, wherein the muting function includes defining a muting area where the muting function is performed and the muting area is in a region of a detection area forming the light curtain, and
wherein a plurality of different muting areas are provided, and wherein the muting area
that exerts the muting function can be switched among the plurality of different muting areas so as to provide a muting area responsive to a size of the predetermined light block substance, and
wherein a controller (20) is adapted to transfer information regarding a further muting area to a muting area register such that when the muting area is switched, muting is performed with respect to all optical paths of the light curtain during transfer of the information of the further muting area.

Preferably, the muting area can be taught to be set to a size related to a predetermined light block substance.

According to the invention, the muting function serves substantially only the area through which a predetermined light block substance passes in the light curtain formed between the light emitting unit and the light receiving unit. In the other areas, the essential protection function of the multi-optical-path photoelectric safety apparatus is on continuously.
Therefore, compatibility between the essential protection function of the multi-optical-path photoelectric safety apparatus and the muting function can be provided. This allows a light block substance such as a workpiece to pass through the light curtain while safety is maintained.

These and other objects and advantages of the invention will become more apparent from the detailed description of the preferred embodiments described below.

The invention will be better understood by reference to the following description of embodiments of the invention taken in conjunction with the accompanying drawings, wherein
FIG. 1 is a drawing to describe an outline of a multi-optical-path photoelectric safety apparatus installed in a conveyor line according to an embodiment of the present invention.

FIG. 2 is a drawing describing a placement example of a light emitting unit and a light receiving unit included in the multi-optical-path photoelectric safety apparatus according to an embodiment of the present invention.

FIG. 3 is a block diagram showing a general configuration of the multi-optical-path photoelectric safety apparatus according to an embodiment of the present invention.

FIG. 4 is an enlarged block diagram of the light emitting unit in the multi-optical-path photoelectric safety apparatus according to an embodiment of the present invention.

FIG. 5 is an enlarged block diagram of the light receiving unit included in the multi-optical-path photoelectric safety apparatus according to an embodiment of the present invention.

FIG. 6 is an enlarged block diagram of a controller included in the multi-optical-path photoelectric safety apparatus according to an embodiment of the present invention.

FIG. 7 is a chart describing the contents of the signals passing through a communication line or a signal line for connecting the light emitting unit, the light receiving unit, and the controller in the multi-optical-path photoelectric safety apparatus according to an embodiment of the present invention.

FIG. 8 is a block diagram conceptually showing a means for setting a muting area by teaching with a limited partial area in a light curtain.

FIG. 9 is a diagram to show a general configuration of the multi-optical-path photoelectric safety apparatus according to an embodiment of the present invention.

FIG. 10 is a drawing describing an outline for a display section installed in the controller.

FIG. 11 is a block diagram conceptually showing a means for setting a muting area as a limited partial area in a light curtain by a user who manually enters the muting area from the outside.

FIGS. 12A-12C are drawings describing the switching to a muting area having a size responsive to the cross-sectional area of a workpiece when the workpiece contains portions having different heights that pass through the light curtain.

FIG. 13 is a drawing describing the switching to a muting area responsive to the size of a workpiece when different types of workpieces are transported on the conveyor line.

FIG. 14 is a drawing describing a muting area of a size corresponding to the size of a workpiece.

FIG. 15 is a drawing describing a muting function of a multi-optical-path photoelectric safety apparatus in a related art device.

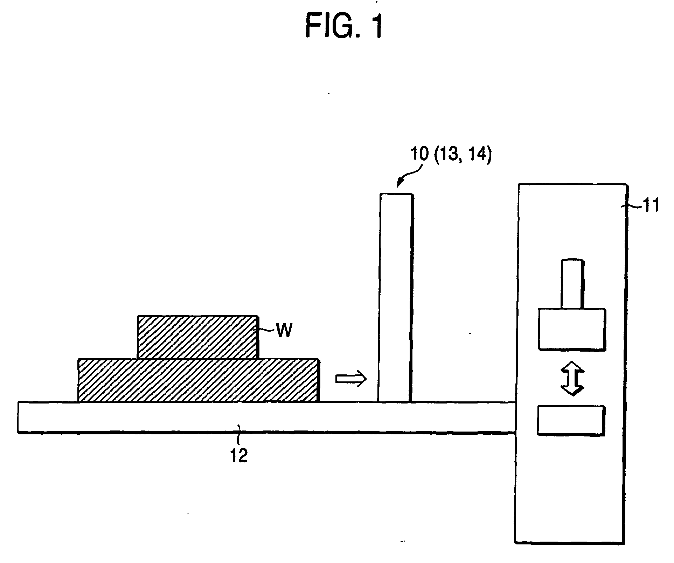

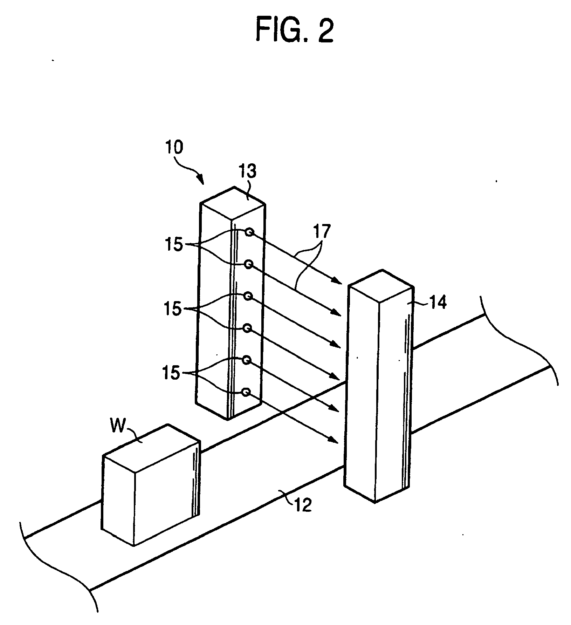

A multi-optical-path photoelectric safety apparatus 10 according to a first embodiment includes a light emitting unit 13 and a light receiving unit 14 placed on either side of a conveyor line 12 that extends to a pressing machine 11 as shown in FIGS. 1 and 2.

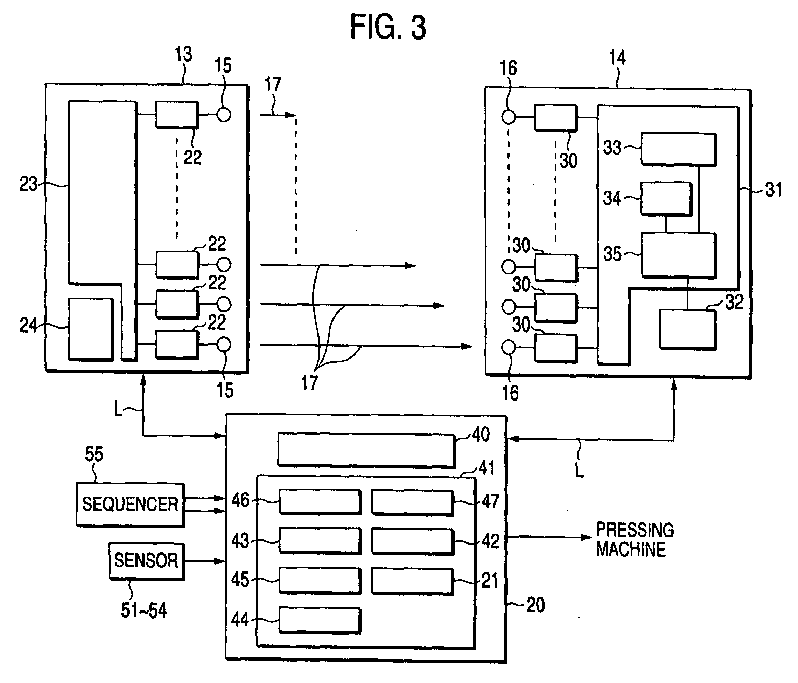

As seen in FIG. 2, the light emitting unit 13 has an elongated case extending in a longitudinal direction and comprises N light emitting elements 15 (that are particularly shown in FIG. 3). The light emitting elements 15 are placed in the case at equal intervals in a row along the lengthwise direction of the case. The interval between the adjacent light emitting elements 15 is not specifically limited and can be, for example, 20 mm.

Likewise, the light receiving unit 14 has an elongated case extending in a longitudinal direction and comprises a corresponding number of light receiving elements 16 (FIG. 3) as the number of the light emitting elements 15. The light receiving elements 16 are placed in the case at equal intervals in a row along the lengthwise direction of the case. The interval between the adjacent light receiving elements 16 is the same as the interval that is used between the adjacent light emitting elements 15.

The light emitting unit 13 and the light receiving unit 14 are placed facing each other with the conveyor line 12 being disposed there between. A horizontal light beam is emitted from each light emitting element 15 of the light emitting unit 13 to the light receiving element 16 of the light receiving unit 14 that corresponds to the light emitting element 15. This forms a light curtain crossing the conveyor line 12 and provides a protective barrier, as shown in FIG. 2. Reference numeral 17 in FIG. 2 denotes an optical path or a light beam and substantially represents a part of the light curtain.

The multi-optical-path photoelectric safety apparatus 10 has a controller 20 as shown in FIG. 3. The controller 20 includes a state display monitor or user interface display section 21.

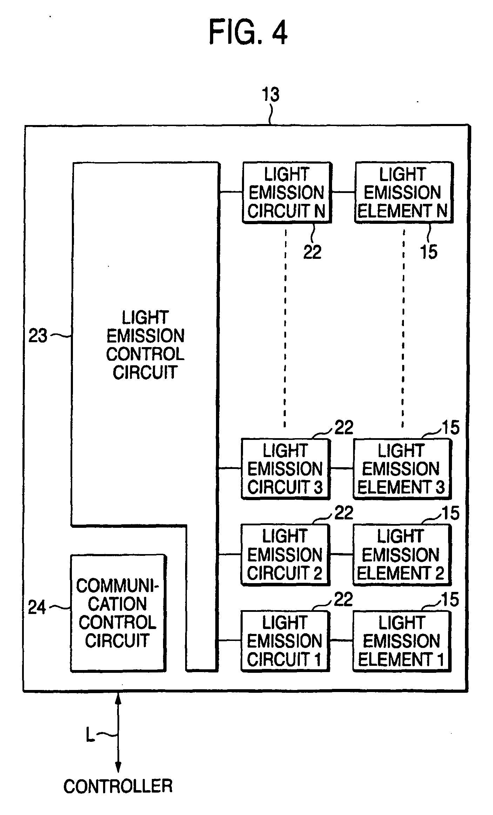

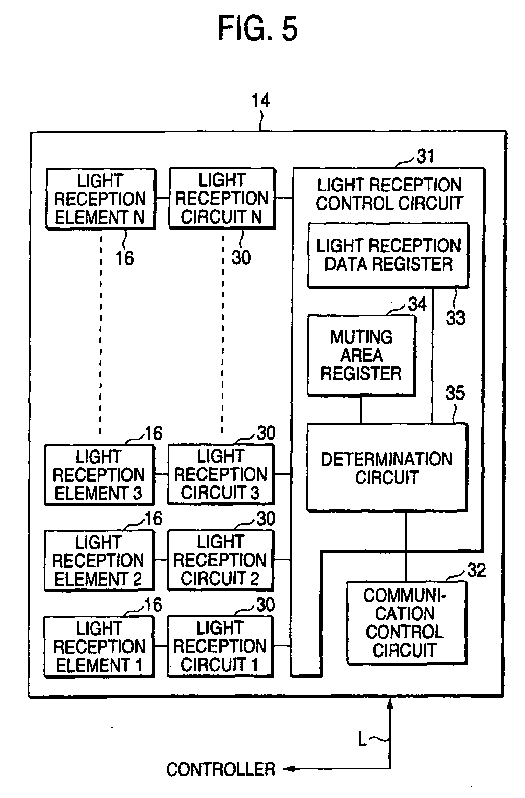

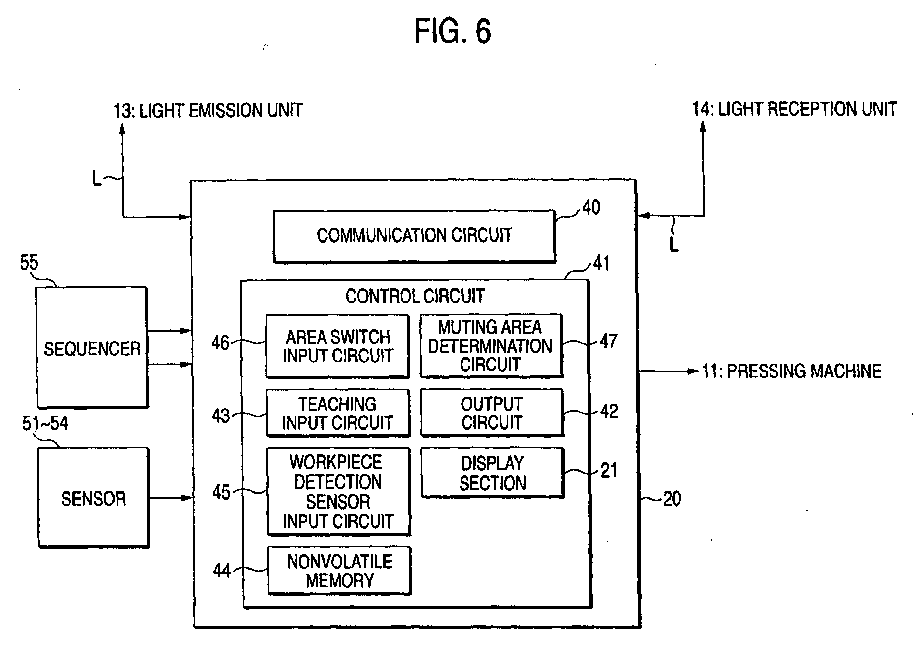

FIGS. 3 to 6 are block diagrams relevant to the multi-optical-path photoelectric safety apparatus 10. FIG. 3 is a block diagram to show the general configuration of the multi-optical-path photoelectric safety apparatus 10. FIG. 4 is a block diagram of the light emitting unit 13. FIG. 5 is a block diagram of the light receiving unit 14. Further, FIG. 6 is a block diagram of the controller 20.

Referring particularly to FIG. 4, the light emitting element 13 comprises the N light emitting elements 15, N light emitting circuits 22, a light emitting control circuit 23, and a communication control circuit 24. The light emitting circuits 22 are provided in a one-to-one correspondence with the light emitting elements 15 which can be, for example, light emitting diodes for driving them. The light emitting control circuit 23 controls the light emitting circuits 22. The communication control circuit 24 controls communications with the controller 20. Upon receiving an instruction from the controller 20, the light emitting control circuit 23 starts the N light emitting circuits 22 in order. This sequentially turns on the light emitting element 15 of the first optical path to the light emitting element 15 of the Nth optical path. Accordingly, the light emitting element 13 emits a light beam in order from the first optical path through the Nth optical path to the light receiving unit 14 at predetermined light emitting timings.

Referring to FIG. 5, the light receiving element 14 comprises the N light receiving elements 16, N light receiving circuits 30, a light receiving control circuit 31, and a communication control circuit 32. The light receiving circuits 30 are provided in a one-to-one correspondence with the light receiving elements 16. The light receiving control circuit 31 controls the light receiving circuits 30. The communication control circuit 32 controls communications with the controller 20. Upon receiving a control signal from the controller 20, the light receiving control circuit 31 makes the light receiving circuit 30 of the first optical path to the light receiving circuit 30 of the Nth optical path operate in synchronization with the operation of the corresponding light emitting circuits 22. This allows the light beams emitted one after another from the light emitting unit 13 to be received at the corresponding light receiving elements 16.

The light receiving control circuit 31 also preferably includes a light receiving data register 33, two muting area registers 34, and a determination circuit 35. The light receiving data register 33 temporarily stores the light receiving data. The muting area register 34 stores information concerning a muting area as will be described later. The determination circuit 35 determines whether any one of optical paths in a detection area other than the muting area is in a light block state based on light incidence/light block information in the detection area outside the muting area (when the muting operation is performed). The determination circuit 35 determines whether any one of the optical paths is in a light blocked state based on the light incidence/light block information in all of the areas of the light curtain when no muting operation is performed.

Referring to FIG. 6, the controller 20 comprises a communication circuit 40 for conducting communications between the light emitting unit 13, the light receiving unit 14 and a control circuit 41.

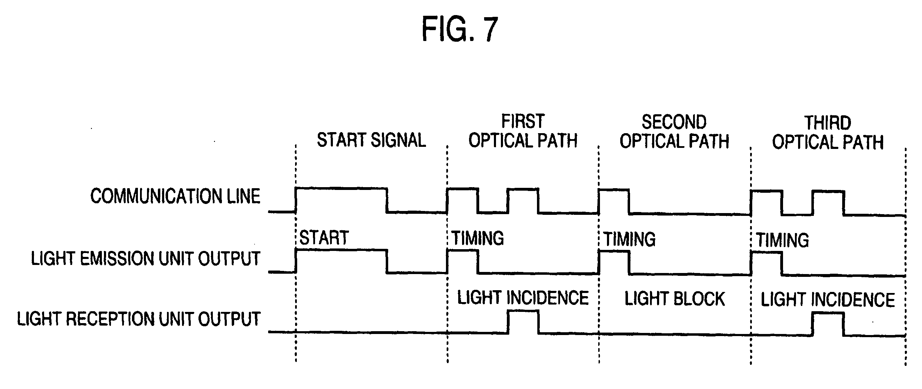

The light emitting unit 13, the light receiving unit 14, and the controller 20 are connected by the communication line or the signal line L. This line L allows not only communications, but also transfer of the light incidence/light block information (FIG. 7) between the controller 20, the light emitting unit 13 and the light receiving unit 14. As seen in FIG. 7, a signal on the communication line or the signal line L is provided by combining the timing signal output from the light emitting unit 13 and the light incidence/light block information signal output from the light receiving unit 14.

The control circuit 41 of the controller 20 preferably comprises the state display monitor or user interface display section 21. The control circuit 41 also comprises an output circuit 42 for turning on/off an output signal for an operation stop signal, etc., to the pressing machine 11 based on information from the determination circuit 35 of the light receiving unit 14.

The controller 20 comprises a teaching input circuit 43 for the user to set a muting area by teaching. The teaching input circuit 43 has a teaching button (not shown) forming a part of input means that can be operated manually by the user. By operating this button, the user can switch the mode between a teaching mode where the user sets a muting area by a teaching method and a normal operation mode (RUN mode) where the multi-optical-path photoelectric safety apparatus 10 operates its essential functions.

The control circuit 41 of the controller 20 further comprises at least one nonvolatile memory 44. When the mode is switched from the teaching mode to the normal operation mode by the user operating the teaching button, the muting area set in the teaching mode is stored in the nonvolatile memory 44.

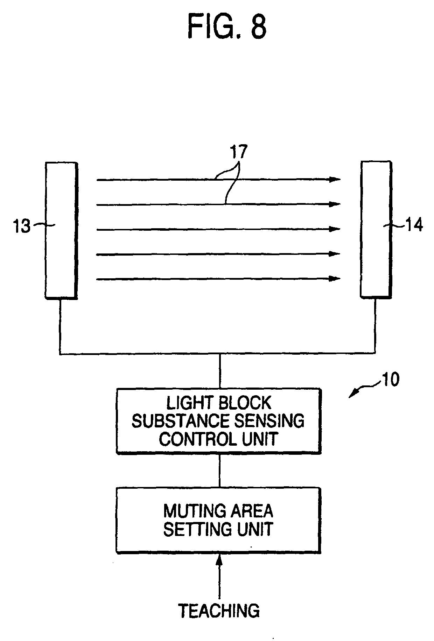

Means related to setting the muting area by the teaching method described above is shown in FIG. 8. That is, the multi-optical-path photoelectric safety apparatus 10 has the light emitting unit 13, the light receiving unit 14, a control unit, and a muting area setting unit. The light emitting unit 13 preferably comprises a large number of light emitting elements equally spaced from each other and that are placed in a row. The light receiving unit 14 is placed facing the light emitting unit 13. The light receiving unit comprises as many light receiving elements as the number of the light emitting, elements. The light receiving elements are equally spaced from each other and they are also placed in a row. For each optical path 17, the control unit controls a light blocking substance sensing function for the multi-optical-path light curtain that senses the entry of a light blocking substance between the light emitting unit 13 and the light receiving unit 14. The muting area setting unit sets a muting area by a teaching mode. It also operates the muting function to temporarily make the light blocking substance sensing function ineffective as a predetermined light blocking substance (such as a workpiece) is allowed to pass through the light curtain. The muting area setting unit enables the user to set the muting area to operate in a limited area of the light curtain.

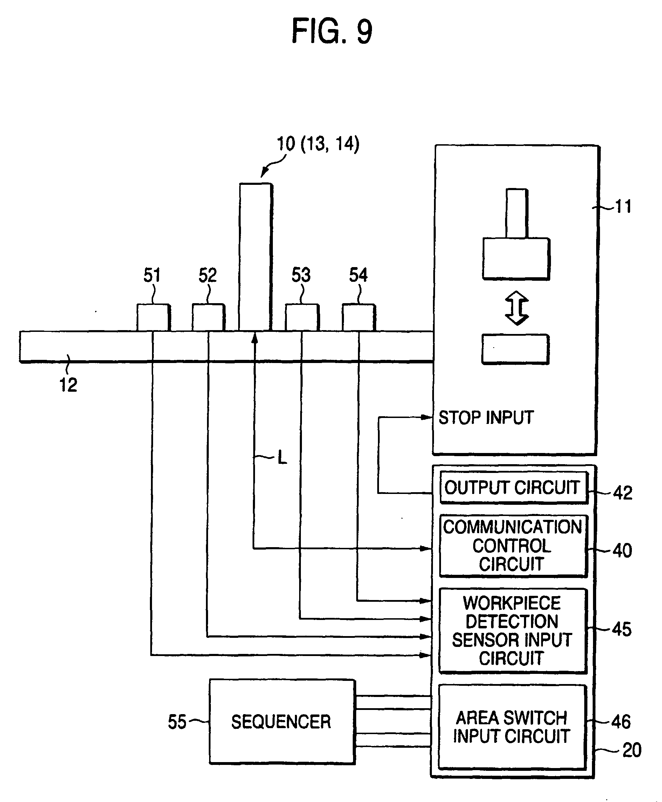

In FIG. 9, a plurality of workpiece detection sensors 51 to 54 are disposed on the conveyor line 12. The light emitting unit 13 and the light receiving unit 14 are between these sensors in the workpiece transport direction. The signals from the sensors 51 to 54 are input to a workpiece detection sensor input circuit 45 of the controller 20.

The conveyor line 12 and the pressing machine 11 are controlled integrally by a sequencer 55. If more than one muting area is set, a muting area switch signal is sent from the sequencer 55 to an area switch input circuit 46 of the controller 20 as shown in FIGS. 6 and 9.

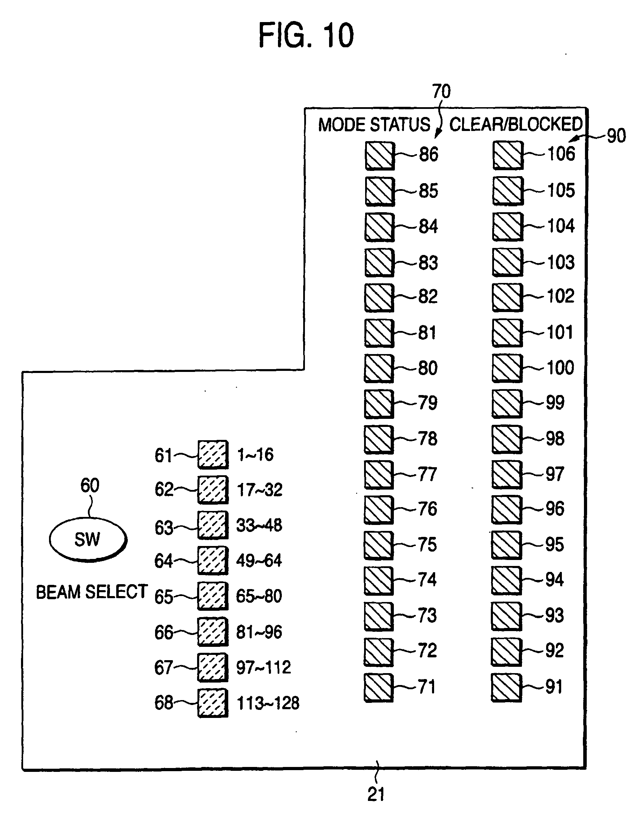

FIG. 10 shows an example of the state display monitor or user interface display section 21. The display section 21 comprises an optical path area selection switch 60 and has a plurality of LED indicator lamps 61 to 68 that are slightly spaced apart and placed in a row in the longitudinal direction to the right of the selection switch 60.

The display section 21 also has a mode state indicator lamp group 70 made up of a plurality of LEDs. The mode state indicator lamp group 70 is not limited to a particular number of lamps. In the embodiment shown, the mode state indicator lamp group 70 is preferably made up of 16 LED indicator lamps 71 to 86 as the basic unit having 16 optical paths. These lamps are slightly spaced apart and are placed with in a row in the longitudinal direction.

The display section 21 also has a light incidence/light block state indicator lamp group 90 made up of a plurality of LEDs. The light incidence/light block state indicator lamp group 90 is not limited to a particular number of lamps. In the embodiment shown, the light incidence/light block state indicator lamp group 90 is preferably made up of 16 LED indicator lamps 91 to 106 as the basic unit having 16 optical paths. These lamps are also slightly spaced apart and are placed in a row in the longitudinal direction.

Since the light incidence/light block information is always supplied from the light receiving unit 14 to the controller 20 over the communication line or the signal line L during the operation of the controller 20, the display section 21 of the controller 20 is updated in real time.

The optical path area selection switch 60 assumes that the light emitting unit 13 and the light receiving unit 14 comprise a maximum of 128 optical paths. Also, the optical path area selection switch 60 provides a selection means for allowing the user to select the optical path area to be displayed on the display section 21 so as to display, in 16 optical-path units, information concerning all of the optical paths on the mode state indicator lamp group 70 and the light incidence/light block state indicator lamp group 90. When the light emitting unit 13 and the light receiving unit 14 comprise 64 optical paths and the user operates the optical path area selection switch 60 to selecting the first block (consisting of the first optical path to the sixteenth optical path), the mode state and the light incidence/light block state of each of these paths are displayed on the mode state indicator lamp group 70 and the light incidence/light block state indicator lamp group 90.

Next, if the user presses the optical path area selection switch 60 again and selects the second block (consisting of the seventeenth optical path to the thirty-second optical path), the mode state and the light incidence/light block state of each of these paths are displayed on the mode state indicator lamp group 70 and the light incidence/light block state indicator lamp group 90. If the user presses the optical path area selection switch 60 again and selects the third block (consisting of the thirty-third optical path to the forty-eighth optical path), the mode state and the light incidence/light block state of each of these paths are displayed on the mode state indicator lamp group 70 and the light incidence/light block state indicator lamp group 90.

If the user again presses the optical path area selection switch 60 and selects the fourth block (consisting of the forty-ninth optical path to the sixty-fourth optical path), the mode state and the light incidence/light block state of each of these paths are displayed on the mode state indicator lamp group 70 and the light incidence/light block state indicator lamp group 90.

It is preferred that the basic unit uses eight indicator lamps 61-68, each lamp being for 16 optical paths. The lamps are disposed to the right of the switch 60 and indicate the current optical path area selected from among the eight blocks to show the first optical path to the 128th optical path. The indicator lamps 61- 68 are arranged in a row in the longitudinal direction and are assigned from top to bottom as follows: The indicator lamp 61 to the first to sixteenth optical paths; the indicator lamp 62 to the seventeenth to thirty-second optical paths; the indicator lamp 63 to the thirty-third to forty-eighth optical paths; the indicator lamp 64 to the forty-ninth to sixty-fourth optical paths; the indicator lamp 65 to the sixty-fifth to eightieth optical paths; the indicator lamp 66 to the eighty-first to ninety-sixth optical paths; the indicator lamp 67 to the ninety-seventh to 112th optical paths; and the indicator lamp 68 to the 113th to 128th optical paths. To display these assignments, an identification sign or numeral (1-16, 17-32, ..., 113-128) is preferably added to the right or top or bottom of each of the indicator lamps 61-68.

The optical path area indicator lamps 61-68 may also be assigned to the optical paths as desired. For example, they may be assigned in an order from bottom to top starting with the first to sixteenth optical paths, the seventeenth to thirty-second optical paths, ..., the 113th to 128th optical paths. When the indicator lamps contained in the indicator lamp groups 70 and 90 are placed side by side, the optical path area indicator lamps 61-68 may be assigned in an order from right to left starting with the first to sixteenth optical paths, the seventeenth to thirty-second optical paths, ..., the 113th to 128th optical paths or they may be assigned in order from left to right starting with the first to sixteenth optical paths, the seventeenth to thirty-second optical paths, ..., the 113th to 128th optical paths.

When the muting area is set, the indicator lamps of the mode state indicator lamp group 70 that correspond to the optical paths where muting is set, are turned on. Accordingly, the user can visually check whether or not the muting area is set for each optical path.

As shown in FIG. 6, the control circuit 41 of the controller 20 further includes a muting area determination circuit 47 for determining a muting area from the light incidence/light block information received from the light receiving unit 14 and the teaching operation information received from the teaching input circuit 43. This muting area determination circuit 47 may include a user interface for enabling the user to directly enter a muting area by, for example, a switch input and/or by a numeric keypad.

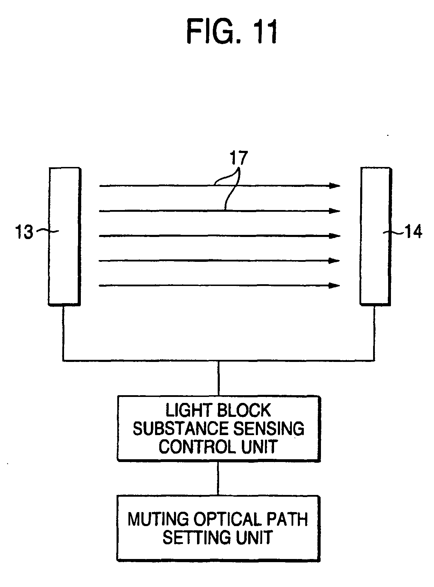

FIG. 11 generally shows a means for setting the muting area by an external input as described above. The multi-optical-path photoelectric safety apparatus 10 has the light emitting unit 13, the light receiving unit 14, the control unit and the muting optical path setting unit. The light emitting unit 13 comprises a large number of light emitting elements equally spaced from each other and placed in a row. The light receiving unit 14 faces the light emitting unit 13 and comprises as many light receiving elements as the number of the light emitting elements. The light receiving elements are also equally spaced from each other and are placed in a row. For each optical path 17, the control unit controls a light blocking substance sensing function for the multi-optical-path light curtain that senses the entry of a light blocking substance between the light emitting unit 13 and the light receiving unit 14. Also for each optical path 17, the muting optical path setting unit sets the muting function to temporarily make the light blocking substance sensing function of the light curtain ineffective as a predetermined light blocking substance (such as a workpiece) is allowed to pass through the light curtain. The muting optical path setting unit allows the user to set the muting area to operate in a limited area of the light curtain.

The teaching operation for storing a part of the detection area of the light curtain in the control circuit 41 as the muting area will now be discussed.

(Step 1) The user switches a switch (not shown) contained in the control circuit 41 of the controller 20 for making the muting function effective.

(Step 2) The user switches a switch (not shown) of the teaching input circuit 43 of the controller 20 for switching the mode from the normal operation mode (RUN mode) to the teaching mode for setting a first muting area.

(Step 3) The user operates the teaching button of the teaching input circuit 43, thereby placing the apparatus in the teaching state, and the user blocks light in the area where the muting function will operate in the light curtain formed between the light emitting unit 13 and the light receiving unit 14. Next, the user operates the teaching button again to confirm the teaching input. In other words, the optical paths blocked between the first teaching button operation and the second teaching button operation are stored as the muting area. The control circuit 31 of the light receiving unit 14 determines whether or not the light receiving circuit 30 for each optical path in the light receiving unit 14 receives the light beam from the corresponding optical path in the light emitting unit 13. The control circuit 31 supplies the light incidence/light block information for each optical path over the communication line or the signal line L to the controller 20 for temporary storage in a register (not shown) of the muting area determination circuit 47. The muting area determination circuit 47 determines whether or not the light incidence/light block information from the light receiving unit 14 matches the information from the teaching input circuit 43, and then determines the muting area.

(Step 4) The user checks on the display section 21 of the controller 20 to see if the muting area is set by performing the teaching operation as intended.

(Step 5) If the user checks and determines that the muting area is set as intended, then the user switches the switch of the teaching input circuit 43 of the controller 20 to switch the mode from the teaching mode to the normal operation mode (RUN mode), and the controller 20 stores the setup first muting area in the nonvolatile memory 44.

(Step 6) The user then executes steps 2 to 5 again to set a second muting area and to store the setup second muting area in the nonvolatile memory 44 of the controller 20.

(Step 7) The user then executes steps 2 to 5 again to set and store a third muting area as required. This step can be repeated for setting additional muting areas.

Next, the operation of the multi-optical-path photoelectric safety apparatus 10 after one or more muting areas are set will be discussed in connection with the case where two muting areas are set. This procedure is preferably applied to a predetermined light block substance or workpiece having portions with different heights such as the workpiece W shown in FIG. 1. It can also be applied to two or more types of predetermined light block substances or workpieces having different heights.

Referring to FIG. 9, a muting area switching signal is input from the sequencer 55 to the area switch input circuit 46 of the controller 20. The controller 20 determines whether or not the input signal is correct. For example, if two input lines are connected for safety, namely, a dual-redundant input signal is adopted, the controller 20 determines whether or not the input signal is correct based on whether the logic of one signal matches that of the other signal.

If it is determined that the input signal is correct, the muting area is switched in accordance with the input signal. For example, the information concerning the first muting area stored in the nonvolatile memory 44 of the controller 20 is transferred to the muting area register 34 of the light receiving unit 14.

When the information is transferred to the light receiving unit 14 it is important to avoid the risk of malfunction in the register and to avoid the risk of malfunction caused by noise when the muting area information is transferred from the controller 20 to the light receiving unit 14. In this regard, a dual-redundant muting area register is preferably adopted and when the data is transferred, verification is also conducted.

Only when a predetermined light block substance or workpiece W transported on the belt conveyor 12 is detected by the workpiece detection sensor 51, 52 and a detection signal is input to the controller 20 according to a predetermined sequence, will the controller 20 determine that the workpiece W has entered the detection area of the light curtain. The controller 20 then starts the muting operation, sends a muting start command to the light receiving unit 14, and turns on an indicator lamp (not shown) to show that the muting operation is now being performed.

Upon receiving a muting start command from the controller 20, the light receiving unit 14 uses the information in the light receiving data register 33 which is storing the light incidence/light block information for each optical path and the information in the muting area register 34 to determine whether any optical path other than the muting area is in a light incidence state or light block state. The light receiving muting then outputs the determination result to the controller 20.

The controller 20 turns the output from the output circuit 42 on and off according to the light incidence/light block information in any area other than the first muting area.

When a muting area switching signal from the sequencer 55 is input to the controller 20, the controller 20 determines whether or not the signal input to the controller 20 is correct according to the above-described procedure. The controller 20 then transfers the information regarding the second muting area stored in the nonvolatile memory 44 to the muting area register 34 of the light receiving unit 14. While the data is being transferred and is being verified, namely, the muting area register 34 of the light receiving unit 14 is being updated, all of the optical paths enter a muting operation state.

When the information in the muting area register 34 of the light receiving unit 14 is changed to that related to the second muting area, the light receiving unit 14 determines whether any optical path other than the second muting area is in a light incidence state or light blocked state. The light receiving unit 14 then the outputs this determination to the controller 20.

This operation is repeated for the predetermined light block substance or workpiece W having portions with different heights as shown in FIG. 1. When the workpiece W passes through the light curtain, the muting function only becomes effective in the muting area based on the height of the workpiece W. This is the area limited to the optical paths blocked by the workpiece W passing through the light curtain. The essential protection function of the multi-optical-path photoelectric safety apparatus 10 is maintained in all other areas. Thus, for example, when an object, such as a human body, enters the light curtain together with the workpiece W, the operation of the pressing machine 11 is forcibly stopped due to the entry of the human body through the light curtain.

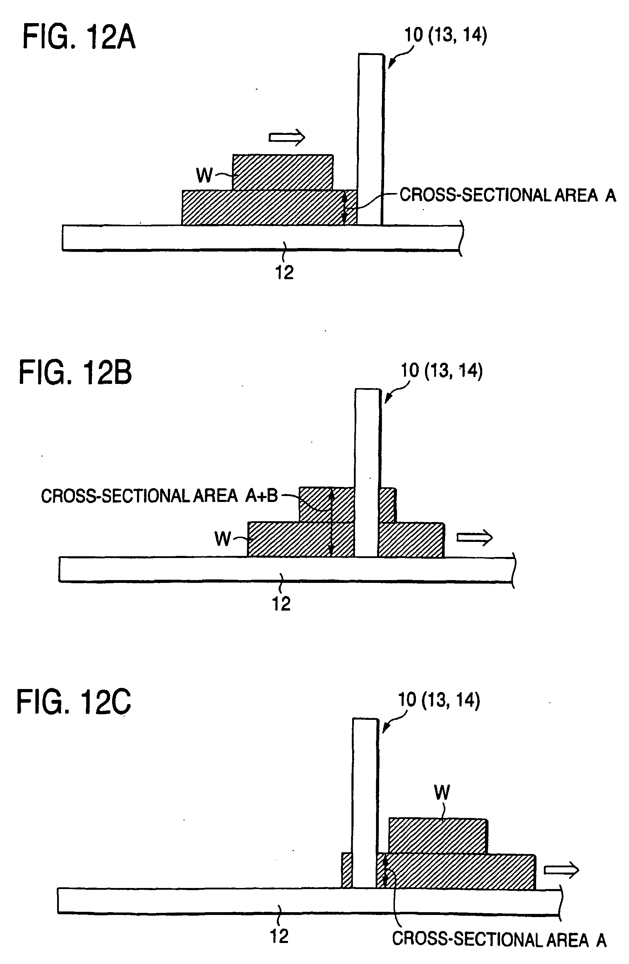

For a workpiece or a predetermined light block substance comprising a varied cross section such as cross-sectional area A, cross-sectional area A+B, and the cross-sectional area A in the workpiece transport direction like the workpiece W in FIGS. 1 and 12A-12C, it is possible for a muting area to be set automatically based on its height dimension. When the muting area is switched, all of the optical paths temporarily enter the muting state while the muting area information is being transferred. Then a transition is made to the muting operation for the new muting area. Accordingly, when the muting area is switched, the muting area that is set in the light curtain can be prevented from entering an undefined state.

If a predetermined light block substance or workpiece is used whose shape continuously changes, the number of setup muting areas can be increased almost continuously. This allows the muting area to be changed in response to the shape of the workpiece.

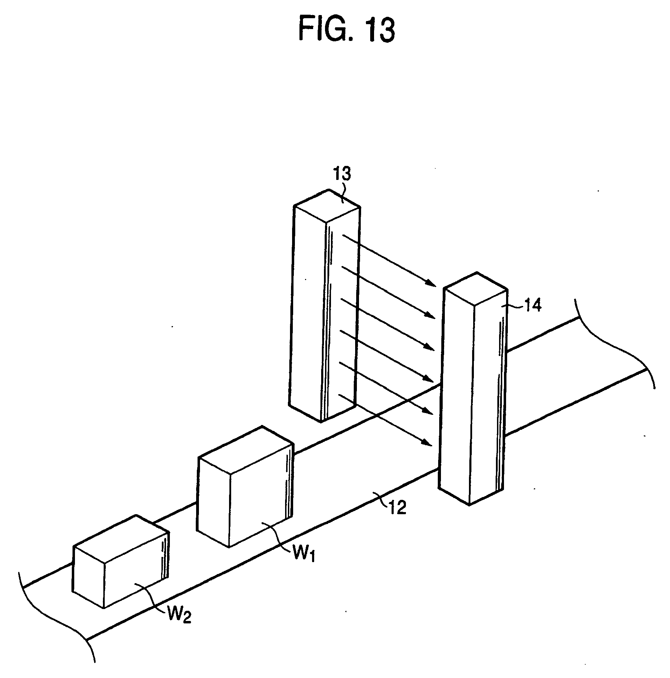

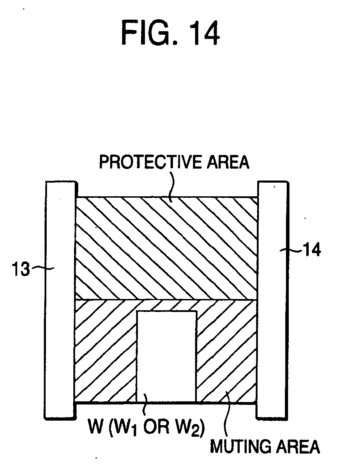

As shown in FIGS. 13 and 14, two or more predetermined light block substances or workpieces W1 and W2 having different height dimensions are transported on the conveyor line 12. When the first workpiece W1 passes through the space between the light emitting unit 13 and the light receiving unit 14, the muting function becomes effective in the first muting area based on the height of the first workpiece W1. When the second workpiece W2 passes through the space between the light emitting unit 13 and the light receiving unit 14, the muting function becomes effective in the second muting area based on the height of the second workpiece W2. Although the muting area may be switched based on a command from the sequencer 55, it is possible to use a sensor to detect the height of a workpiece. Then a muting area corresponding to the height of the workpiece may be selected based on the information detected by the sensor and the muting function becomes effective in the newly selected muting area.

If an invalid muting area switching signal from the sequencer 55 is input to the controller 20, and the logic of one of dual signals does not match that of the other signal, it is assumed that the reliability of the whole system is degraded. Then the output from the controller 20 is preferably turned off, the operation of the pressing machine 11 is forcibly stopped, and an error message is displayed.

Since the muting area register 34 and the determination circuit 35 are placed in the light receiving unit 14, the muting area cannot be defined while muting area change data is being transferred from the controller 20 to the light receiving unit 14 or while data is being verified. As a result, all of the optical paths are temporarily placed in the muting state. However, the light receiving unit 14 is provided with a plurality of muting area registers 43, whereby it is possible to change the muting area without temporarily placing all of the optical paths in the muting state.

In the embodiment shown, the determination circuit 35 is located in the light receiving unit 14. This circuit can also be used to provide another function of the light curtain and also may be placed in the controller 20 rather than in the light receiving unit 14. Likewise, the muting area register 34 may also be placed in the controller 20 rather than in the light receiving unit 14.

As a further modification, the detection area of the light curtain may be divided into several blocks and a plurality of muting areas defined in each block may be provided. The user may also set any desired muting area or an area in which the muting function is suppressed by an external input. The user may also set a part of the detection area of the light curtain as a muting area. This is done by entering the optical path number for the muting area to be set by an external input means such as a numeric keypad, etc.

A personal computer may also be connected to the controller 20 using a USB, RS232C, RS485, on other connection. This allows the user to specify a part of the detection area of the light curtain as the muting area from the personal computer, thereby setting the muting area.

The preferred embodiments of the present invention have been described primarily using the case where the light emitting element 13 and the light receiving unit 14 are installed across the conveyor line 12. However, the invention is not limited to this arrangement. For example, this invention can also be applied where a light curtain is installed so that it surrounds a dangerous source in an apparatus.

It is to be understood that although the present invention has been described with regard to preferred embodiments thereof, various other embodiments and variants may occur to those skilled in the art, which are within the scope of the appended claims.

## Claims

1. A multi-optical-path photoelectric safety apparatus (10) comprising:
a light emitting unit (13);
a light receiving unit (14) forming a light curtain with the light receiving unit; and
a muting function for temporarily rendering a protection function of the light curtain ineffective by allowing a predetermined light block substance to pass through the light curtain, and
wherein the muting function includes defining a muting area where the muting function is performed and the muting area is in a region of a detection area forming the light curtain, and
wherein a plurality of different muting areas are provided, and wherein the muting area that exerts the muting function can be switched among the plurality of different muting areas so as to provide a muting area responsive to a size of the predetermined light block substance, and wherein a controller (20) is adapted to transfer information regarding a further muting area to a muting area register (34) such that when the muting area is switched, muting is performed with respect to all optical paths of the light curtain during transfer of the information of the further muting area.

2. The multi-optical-path photoelectric safety apparatus according to claim 1, wherein the light emitting unit has a plurality of light emitting elements (15) that are equally spaced from each other and placed in a row, and the light receiving unit is arranged so as to face the light emitting unit, the light receiving unit has a corresponding number of light receiving elements (16) as the number of the light emitting elements, the light receiving elements are equally spaced from each other and are placed in a row, and wherein each of the light receiving elements and corresponding light emitting elements form optical paths (17) for forming the light curtain.

3. The multi-optical-path photoelectric safety apparatus according to claim 1 or 2, wherein
all optical paths (17) of the multi-optical-path photoelectric safety apparatus are separated into blocks by the basic unit having a plurality of optical paths (17), and wherein
a display section (21) has
- a display (61, 62, ... 68) for each block unit and
- selecting means (60) for selecting each of the blocks.

4. The multi-optical-path photoelectric safety apparatus according to claim 2, further comprising:
a display section (70) for displaying whether the muting area is set for each of the optical paths.

5. The multi-optical-path photoelectric safety apparatus according to any of the preceding claims, wherein the muting area includes all of the detection areas of the light curtain.

6. The multi-optical-path photoelectric safety apparatus according to any of the preceding claims, wherein the detection area of the light curtain is divided into predetermined blocks and the plurality of different muting areas are set for each block, and wherein the muting function selects the muting area from the plurality of different muting areas in each predetermined block.

7. The multi-optical-path photoelectric safety apparatus according to any of the preceding claims, wherein the muting area is set by teaching.

8. The multi-optical-path photoelectric safety apparatus according to any of claims 1 to 6, wherein the muting area is set by an external input means.

9. The multi-optical-path photoelectric safety apparatus according to any of the preceding claims, further comprising:
a storing section (44) for storing information of a plurality of different muting areas for exerting the muting function; and
a muting area switch unit for switching the muting area from among the plurality of different muting areas in the storing section, so as to provide a muting area responsive to a size of a predetermined light block substance.

10. The multi-optical-path photoelectric safety apparatus according to any of claims 2 to 8, wherein
the light receiving unit (14) is separated from the light emitting unit, further comprising:
a control unit for controlling each of the optical paths to detect entry of a light block substance; and
a muting optical path setting unit for setting a muting function for each of the optical paths,
wherein the muting optical path setting unit exerts the muting function to define the muting area.

11. The multi-optical-path photoelectric safety apparatus according to claim 10, further comprising:
a storing section (44) for storing information of a plurality of different muting areas for exerting the muting function, the different muting areas being set by the muting optical path setting unit; and
a muting area switch unit for switching the muting area from among the plurality of different muting areas in the storing section, so as to provide a muting area responsive to a size of a predetermined light block substance.

12. The multi-optical-path photoelectric safety apparatus according to any of claims 2 to 8 further comprising:
a muting area setting unit for setting the muting function for the muting area,
wherein the muting area setting unit exerts the muting function for a part of the light curtain.

13. The multi-optical-path photoelectric safety apparatus according to claim 12, further comprising:
a storing section (44) for storing information of a plurality of different muting areas where the muting function can be performed, the different muting areas being set by the muting area setting unit; and
a muting area switch unit for selecting and switching the muting area from among the plurality of different muting areas in the storing section, so that a selected muting area is responsive to a size of the predetermined light block substance.

## Patentansprüche

1. Eine fotoelektrische Multi-Lichtweg-Sicherheitsvorrichtung, beinhaltend:
eine Leuchteinheit (13); eine Licht-Empfangseinheit (14), die mit der Leuchteinheit einen Lichtvorhang ausbildet; und
eine Unterdrückungsfunktion, um eine Schutzfunktion des Lichtvorhangs zeitweise wirkungslos zu machen, indem einem vorbestimmten Lichtsperr-Werkstoff erlaubt wird, durch den Lichtvorhang zu passieren, und
wobei die Unterdrückungsfunktion das Definieren eines Unterdrückungsbereichs, in dem die Unterdrückungsfunktion durchgeführt wird, beinhaltet, und der Unterdrückungsbereich in einer Region eines Detektionsbereichs ist, der den Lichtvorhang ausbildet, und wobei
eine Mehrzahl von unterschiedlichen Unterdrückungsbereichen zur Verfügung gestellt sind, und wobei der Unterdrückungsbereich, der die Unterdrückungsfunktion ausübt, zwischen der Mehrzahl der unterschiedlichen Unterdrückungsbereiche gewechselt werden kann, um so einen Unterdrückungsbereich zur Verfügung zu stellen, der auf eine Größe des vorbestimmten Lichtsperr-Werkstoffs reagiert, und wobei eine Steuerung (20) angepasst ist, um Information im Bezug auf einen weiteren Unterdrückungsbereich an ein Unterdrückungsbereichs-Register zu übertragen, so dass wenn der Unterdrückungsbereich gewechselt wird, Unterdrückung im Bezug auf alle Lichtwege des Lichtvorhangs während des Übertragens der Information des weiteren Unterdrückungsbereichs durchgeführt wird.

2. Die fotoelektrische Multi-Lichtweg-Sicherheitsvorrichtung gemäß Anspruch 1, wobei die Leuchteinheit eine Mehrzahl von Leuchtelementen (15) hat, die äquidistant zueinander sind und in einer Reihe angeordnet sind, und die Licht-Empfangseinheit so angeordnet ist, dass sie der Leuchteinheit gegenüber ist, die Licht-Empfangseinheit eine der Zahl der Leuchtelemente korrespondierende Zahl von Licht-Empfangselementen (16) hat, die Licht-Empfangselemente äquidistant zueinander und in einer Reihe angeordnet sind, und wobei jeweils die Licht-Empfangselemente und korrespondierende Leuchtelemente Lichtwege (17) zum Ausbilden des Lichtvorhangs ausbilden.

3. Die fotoelektrische Multi-Lichtweg-Sicherheitsvorrichtung gemäß Anspruch 1 oder 2, wobei alle optischen Achsen der Multi-Lichtweg fotoelektrischen Sicherheitsvorrichtung durch die Grundeinheit, die eine Mehrzahl optischer Achsen hat, in Blöcke geteilt sind, und wobei das Anzeigenteil eine Anzeige von jeder Blockeinheit und Selektionsmittel zum Selektieren von jedem der Blöcke hat.

4. Die fotoelektrische Multi-Lichtweg-Sicherheitsvorrichtung gemäß Anspruch 2, weiter beinhaltend:
ein Anzeigenteil (70) zum Anzeigen, ob der Unterdrückungsbereich für jeden der Lichtwege gesetzt ist.

5. Die fotoelektrische Multi-Lichtweg-Sicherheitsvorrichtung gemäß einem der vorhergehenden Ansprüche, wobei der Unterdrückungsbereich jeden der Detektionsbereiche des Lichtvorhangs beinhaltet.

6. Die fotoelektrische Multi-Lichtweg-Sicherheitsvorrichtung gemäß einem der vorhergehenden Ansprüche, wobei der Detektionsbereich des Lichtvorhangs in vorbestimmte Blöcke geteilt ist und die Mehrzahl der Unterdrückungsbereiche für jeden Block gesetzt sind, und wobei die Unterdrückungsfunktion den Unterdrückungsbereich aus der Mehrzahl der unterschiedlichen Unterdrückungsbereiche in jedem vorbestimmten Block auswählt.

7. Die fotoelektrische Multi-Lichtweg-Sicherheitsvorrichtung gemäß einem der vorhergehenden Ansprüche, wobei der Unterdrückungsbereich durch Teaching gesetzt wird.

8. Die fotoelektrische Multi-Lichtweg-Sicherheitsvorrichtung gemäß einem der Ansprüche 1 bis 6, wobei der Unterdrückungsbereich durch ein externes Eingabemittel gesetzt wird.

9. Die fotoelektrische Multi-Lichtweg-Sicherheitsvorrichtung gemäß einem der vorhergehenden Ansprüche, weiter beinhaltend:
ein Speicherteil (44) zum Speichern von Information einer Mehrzahl von unterschiedlichen Unterdrückungsbereichen zum Ausüben der Unterdrückungsfunktion; und
eine Unterdrückungsbereich-Wechseleinheit zum Wechseln des Unterdrückungsbereichs zwischen der Mehrzahl der unterschiedlichen Unterdrückungsbereiche in dem Speicherteil, um so einen Unterdrückungsbereich zur Verfügung zu stellen, der auf eine Größe eines vorbestimmten Lichtsperr-Werkstoffs reagiert.

10. Die fotoelektrische Multi-Lichtweg-Sicherheitsvorrichtung gemäß einem der Ansprüche 2 bis 8, wobei die Licht-Empfangseinheit (14) von der Leuchteinheit getrennt ist, weiterhin beinhaltend:
eine Steuereinheit zum Steuern von jedem der Lichtpfade, um einen Eintritt eines Lichtsperr Werkstoffes zu detektieren; und
eine Lichtweg-Unterdrückungs-Einrichteinheit zum Einrichten einer Unterdrückungsfunktion für jeden der Lichtwege,
wobei die Lichtweg-Unterdrückungs-Einrichteinheit die Unterdrückungsfunktion ausübt, um den Unterdrückungsbereich zu definieren.

11. Die fotoelektrische Multi-Lichtweg-Sicherheitsvorrichtung gemäß Anspruch 10, weiter beinhaltend:
ein Speicherteil (44) zum Speichern von Information einer Mehrzahl von unterschiedlichen Unterdrückungsbereichen zum Ausüben der Unterdrückungsfunktion, die unterschiedlichen Unterdrückungsbereiche werden durch die Lichtweg-Unterdrückungs-Einrichteinheit gesetzt; und
eine Unterdrückungsbereich-Wechseleinheit zum Wechseln des Unterdrückungsbereichs zwischen der Mehrzahl der unterschiedlichen Unterdrückungsbereiche in dem Speicherteil, so dass ein Unterdrückungsbereich zur Verfügung gestellt wird, der auf eine Größe eines vorbestimmten Lichtsperr-Werkstoffes reagiert.

12. Die fotoelektrische Multi-Lichtweg-Sicherheitsvorrichtung gemäß einem der Ansprüche 2 bis 8, weiter beinhaltend:
eine Unterdrückungsbereich-Einrichtreinheit zum Setzen der Unterdrückungsfunktion für den Unterdrückungsbereich, wobei die Unterdrückungsbereich-Einrichteinheit die Unterdrückungsfunktion für einen Teil des Lichtvorhangs ausübt.

13. Die fotoelektrische Multi-Lichtweg-Sicherheitsvorrichtung gemäß Anspruch 12, weiter beinhaltend:
ein Speicherteil (44) zum Speichern von Information einer Mehrzahl von unterschiedlichen Unterdrückungsbereichen, in denen die Unterdrückungsfunktion durchgeführt werden kann, die unterschiedlichen Unterdrückungsbereiche werden durch die Unterdrückungsbereich-Einrichteinheit gesetzt; und
eine Unterdrückungsbereich-Wechseleinheit zum Wählen und Wechseln des Unterdrückungsbereichs von der Mehrzahl der unterschiedlichen Unterdrückungsbereiche in dem Speicherteil, so dass ein ausgewählter Unterdrückungsbereich auf eine Größe des vorbestimmten Lichtsperr-Werkstoffes reagiert.

## Revendications

1. Dispositif de sécurité photoélectrique à chemin optique multiple comprenant :
une unité d'émission de lumière (13) ;
une unité de réception de lumière (14) formant un rideau de lumière avec l'unité de réception de lumière ; et
une fonction de silence pour rendre temporairement inefficace une fonction de protection du rideau de lumière en permettant à une substance de blocage de lumière prédéterminée de passer à travers le rideau de lumière, et
dans lequel la fonction de silence comprend la définition d'une zone de silence où la fonction de silence est effectuée et la zone de silence est dans une région d'une zone de détection formant le rideau de lumière, et
dans lequel une pluralité de zones de silence différentes sont prévues et dans lequel la zone de silence qui exerce la fonction de silence peut être commutée parmi la pluralité de zones de silence différentes de manière à fournir une zone de silence sensible à une dimension de la substance de blocage de lumière prédéterminée, et dans lequel
un moyen de commande (20) est conçu pour transférer l'information concernant une zone de silence supplémentaire à un registre de zones de silence de manière que, lorsque la zone de silence est commutée, le silence soit effectué par rapport à tous les chemins optiques du rideau de lumière pendant le transfert de l'information de la zone de silence supplémentaire.

2. Dispositif de sécurité photoélectrique à chemin optique multiple selon la revendication 1, dans lequel l'unité d'émission de lumière a une pluralité d'éléments d'émission de lumière (15) qui sont uniformément espacés entre eux et placés en une rangée et l'unité de réception de lumière est disposée de manière à faire face à l'unité d'émission de lumière, l'unité de réception de lumière a un nombre d'éléments de réception de lumière (16) correspondant au nombre d'éléments d'émission de lumière, les éléments de réception de lumière sont uniformément espacés entre eux et sont placés en une rangée et dans lequel chacun des éléments de réception de lumière et des éléments d'émission de lumière correspondants forment des chemins optiques (17) pour former le rideau de lumière.

3. Dispositif de sécurité photoélectrique à chemin optique multiple selon la revendication 1 ou 2, dans lequel
tous les axes optiques du dispositif de sécurité photoélectrique à chemin optique multiple sont séparés en blocs par l'unité de base ayant une pluralité d'axes optiques, et dans lequel
la section d'affichage a
- une unité d'affichage pour chaque bloc et
- des moyens de sélection pour sélectionner chacun des blocs.

4. Dispositif de sécurité photoélectrique à chemin optique multiple selon la revendication 2, comprenant en outre :
une section d'affichage (70) pour afficher si la zone de silence est réglée pour chacun des chemins optiques.

5. Dispositif de sécurité photoélectrique à chemin optique multiple selon l'une quelconque des revendications précédentes, dans lequel la zone de silence comprend toutes les zones de détection du rideau de lumière.

6. Dispositif de sécurité photoélectrique à chemin optique multiple selon l'une quelconque des revendications précédentes, dans lequel la zone de détection du rideau de lumière est divisée en blocs prédéterminés et la pluralité de zones de silence différentes est fixée pour chaque bloc et dans lequel la fonction de silence sélectionne la zone de silence parmi la pluralité de zones de silence différentes dans chaque bloc prédéterminé.

7. Dispositif de sécurité photoélectrique à chemin optique multiple selon l'une quelconque des revendications précédentes, dans lequel la zone de silence est établie par enseignement.

8. Dispositif de sécurité photoélectrique à chemin optique multiple selon l'une quelconque des revendications 1 à 6, dans lequel la zone de silence est établie par un moyen d'entrée externe.

9. Dispositif de sécurité photoélectrique à chemin optique multiple selon l'une quelconque des revendications précédentes, comprenant en outre :
une section de mémorisation (44) pour mémoriser l'information d'une pluralité de zones de silence différentes pour exercer la fonction de silence ; et
une unité de commutation de zone de silence pour commuter la zone de silence parmi la pluralité de zones de silence différentes dans la section de mémorisation, de manière à fournir une zone de silence sensible à une dimension d'une substance de blocage de lumière prédéterminée.

10. Dispositif de sécurité photoélectrique à chemin optique multiple selon l'une quelconque des revendications 2 à 8, dans lequel
l'unité de réception de lumière (14) est séparée de l'unité d'émission de lumière,
comprenant en outre :
une unité de commande pour commander chacun des chemins optiques pour détecter l'entrée d'une substance de blocage de lumière ; et
une unité de réglage de chemin optique de silence pour régler une fonction de silence pour chacun des chemins optiques,
dans lequel l'unité de réglage de chemin optique de silence exerce la fonction de silence pour définir la zone de silence.

11. Dispositif de sécurité photoélectrique à chemin optique multiple selon la revendication 10, comprenant en outre :
une section de mémorisation (44) pour mémoriser l'information d'une pluralité de zones de silence différentes pour exercer la fonction de silence, les zones de silence différentes étant réglées par l'unité de réglage de chemin optique de silence ; et
une unité de commutation de zone de silence pour commuter la zone de silence parmi la pluralité de zones de silence différentes dans la section de mémorisation, de manière à fournir une zone de silence sensible à une dimension d'une substance de blocage de lumière prédéterminée.

12. Dispositif de sécurité photoélectrique à chemin optique multiple selon l'une quelconque des revendications 2 à 8, comprenant en outre :
une unité de réglage de zone de silence pour régler la fonction de silence pour la zone de silence,
dans lequel l'unité de réglage de zone de silence exerce la fonction de silence pour une partie du rideau de lumière.

13. Dispositif de sécurité photoélectrique à chemin optique multiple selon la revendication 12, comprenant en outre :
une section de mémorisation (44) pour mémoriser l'information d'une pluralité de zones de silence différentes où la fonction de silence peut être effectuée, les zones de silence différentes étant réglées par l'unité de réglage de zone de silence ; et
une unité de commutation de zone de silence pour sélectionner et commuter la zone de silence parmi la pluralité de zones de silence différentes dans la section de mémorisation, de manière qu'une zone de silence sélectionnée soit sensible à une dimension de la substance de blocage de lumière prédéterminée.
